# EUROPÄISCHE PATENTSCHRIFT

(11) **EP 1 942 828 B1**
(45) Veröffentlichungstag und Bekanntmachung des Hinweises auf die Patenterteilung: **17.05.2017**
(21) Anmeldenummer: 06805496.4
(22) Anmeldetag: 26.10.2006
(51) Int. Cl.: A61C 13/00

(54) **VERFAHREN ZUR HERSTELLUNG MEHRSCHICHTIG AUFGEBAUTEN ZAHNERSATZES**
METHOD FOR PRODUCING A TOOTH REPLACEMENT HAVING A MULTI-LAYER STRUCTURE
PROCEDE DE FABRICATION D'UNE PROTHESE DENTAIRE A STRUCTURE MULTICOUCHE

(30) Priorität: 03.11.2005 DE 102005052838
(43) Veröffentlichungstag der Anmeldung: 16.07.2008
(73) Patentinhaber: Fraunhofer Gesellschaft zur Förderung der angewandten Forschung e.V., 80686 München (DE); Luthardt Vermögensverwaltungs-GmbH, 63517 Rodenbach (DE)
(72) Erfinder: LUTHARDT, Ralph, Gunnar, 01309 Dresden (DE); JOHANNES, Martina, 07629 Hermsdorf (DE)
(74) Vertreter: Oehmke, Volker
(86) Internationale Anmeldenummer: PCT/DE2006/001899
(87) Internationale Veröffentlichungsnummer: WO 2007/051447

(56) Entgegenhaltungen:
- EP-A- 1 561 433
- EP-A2- 1 568 335
- WO-A-98/27890

## Beschreibung

Die Erfindung betrifft ein Verfahren zur Herstellung individueller, mehrschichtig aufgebauter Brücken, Kronen, Teilkronen, Onlays und Inlays.

Bei der Versorgung von Patienten mit einzelnen stark zerstörten Zähnen kommen sogenannte Einzelkronen zur Anwendung. Hierzu werden die Zähne durch den Zahnarzt in der Art präpariert, dass konische Zahnstümpfe entstehen. Die fehlende Zahnsubstanz wird dabei durch die künstliche Krone ersetzt. Sind einzelne Zähne so stark zerstört, dass diese entfernt werden mussten, kommen im Alveolarknochen verankerte Implantate (künstliche Zahnwurzeln) zur Anwendung. Auf diese werden präfabrizierte konische Aufbauteile aufgesetzt, die eine den präparierten Zahnstümpfen vergleichbare Form aufweisen. Alternativ werden Zähne, die vor und/oder hinter dem fehlenden Zahn/ Zähnen stehen, in der oben beschriebenen Form präpariert. Im Bereich der fehlenden Zähne werden Brückenzwischenglieder eingefügt, um diese zu ersetzen.

All diesen Situationen ist gemeinsam, dass der Zahnarzt eine Abformung der Mundsituation nimmt. Dieses Negativ wird durch den Zahntechniker in ein Positiv umgesetzt (Modell). Dieses dient der Anfertigung des Zahnersatzes durch den Zahntechniker in einem manuellen Herstellverfahren. Metalle, Keramik und Polymere werden dabei alleine oder als Verbund verarbeitet. Nach der Kontrolle des Zahnersatzes durch den Zahnarzt im Munde des Patienten hinsichtlich Aussehen, Passgenauigkeit, Funktionstüchtigkeit gegenüber den angrenzenden Geweben (Schleimhaut, Wange, antagonistische Zähne, Nachbarzähne) wird der Zahnersatz definitiv auf den präparierten Zahnstümpfen befestigt

Alternativ kann der Zahnersatz auch durch CAD/CAM-Verfahren hergestellt werden. Die erforderlichen Messdaten für den Reverse Engineering Prozess werden durch optische oder mechanische Digitalisierung im Munde des Patienten (intraoral) oder anhand der Modelle (extraoral) gewonnen. Es folgt eine Konstruktion der Form des Zahnersatzes im Computer und eine anschließende Herstellung durch subtraktive (Schleifen, Fräsen) oder additive (Pressen, Gießen, Lasersintern) Verfahren.

Unabhängig von der Herstellung des Zahnersatzes (konventionell, CAD/CAM) werden aus ästhetischen Gründen unterschiedliche Materialien kombiniert (Keramik auf Metall, Polymere auf Metall, Keramik auf Keramik). Die für die Oberflächengestaltung verwendeten Materialien werden dabei überwiegend unter ästhetischen Aspekten ausgewählt, weisen aber hinsichtlich der mechanischen Eigenschaften Nachteile auf.

Herausnehmbarer Zahnersatz wird mittels Halteelementen (z.B. Klammern, Attachments) am Restzahnbestand verankert, weshalb dessen Gerüststruktur zwingend aus Werkstoffen mit entsprechend abgestimmten elastischen Eigenschaften hergestellt werden muss. Ursächlich hierfür ist das elastische Aufbiegen der Halteelemente beispielsweise beim Eingliedern bis zum Erreichen des sogenannten Prothetischen Äquators. Unterhalb dieses, d.h. beim elastischen Rückstellen der Klammerelemente wird der herausnehmbare Zahnersatz sicher am Restzahnbestand fixiert. Beim Ausgliedern des Zahnersatzes werden die Klammerelemente wiederum elastisch aufgebogen und müssen sich anschließend wieder deformationsfrei zurückstellen. Derartige Werkstoffeigenschaften sind mit metallischen Werkstoffen aber auch Polymeren zu erreichen, während keramische Werkstoffe hierfür bislang ungeeignet erscheinen. Auch für festsitzenden Zahnersatz werden keramische Werkstoffe bislang nur für kurzspannige und nicht für langspannige Brücken eingesetzt.

Die Gestaltung eines mehrschichtigen Zahnersatzes erfolgt unabhängig vorn dem Herstellverfahren auf der Grundlage von Erfahrungen. Eine gezielte Gestaltung des Zahnersatzes, ausgehend von den mechanischen, ästhetischen und funktionellen Anforderungen mit einer entsprechenden Konstruktion der einzelnen Anteile des Verbundkörpers (hochfestes Gerüst, ästhetische Verblendung), erfolgt bislang nicht EP 1 561 433 A offenbart ein Verfahren zur Herstellung mehrschichtig aufgebauten Zahnersatzes mit einem CAD-Datensatz.

Der Erfindung liegt die Aufgabe zugrunde, ein Verfahren anzugeben, mit dem unter Vermeidung aufwendiger Handarbeit die Herstellung ästhetischer mehrschichtiger Brücken, Kronen, Teilkronen und Inlays ermöglicht wird.

Erfindungsgemäß wird die Aufgabe mit einem Verfahren nach Anspruch 1 gelöst.

Nachfolgend soll die Erfindung anhand von Ausführungsbeispielen näher erläutert werden.

Zunächst werden Messdaten der bereits für die Aufnahme des Zahnersatzes präparierten Zahnstümpfe, der angrenzenden Gewebe, der Nachbarzähne und Antagonisten ermittelt und bilden die Grundlage des CAD-Datensatzes. Die Messdaten können dabei intraoral oder von Kiefermodellen oder Teilmodellen oder vorliegenden Halbzeugen (Implantatkomponenten, Brückengerüsten) extraoral erstellt werden. Der daraus abgeleitete CAD-Datensatz repräsentiert den zu erstellenden Zahnersatz als eine geschlossene Volumenform. Bei der Herstellung eines Zahnersatzes sind ästhetische, funktionelle und mechanische Aspekte zu berücksichtigen. Ausgehend davon werden Anteile berechnet, die aus mechanisch festen Werkstoffen bestehen müssen, solche die aus funktionell vorteilhaften Werkstoffen und solche die aus ästhetisch vorteilhaften Werkstoffen hergestellt werden müssen. Die Herstellung des Zahnersatzes erfolgt durch CAM-Fertigung von Hohlformen, in denen zunächst die Anteile des Zahnersatzes mit den höchsten Verarbeitungstemperaturen hergestellt werden. Nachfolgend werden Formen hergestellt, um die Anteile der Werkstoffe mit niedrigeren Verarbeitungstemperaturen hinzuzufügen. Dabei bilden die in vorherigen Prozessschritten bereits hergestellten Anteile des Zahnersatzes, die entweder ästhetische, funktionelle oder mechanische Anforderungen berücksichtigen, Anteile der Form. Erfindungsgemäß wird deshalb der CAD-Datensatz in mindestens zwei CAD-Teildatensätze zerlegt, wobei der erste CAD-Teildatensatz das Innere des mehrschichtig aufgebauten Zahnersatzes repräsentiert und der zweite CAD-Teildatensatz den äußeren Teil des Zahnersatzes. Somit kann zunächst ein nach mechanischen Gesichtspunkten geformtes hochfestes Brückengerüst aus Metall mittels des ersten CAD-Teildatensatzes und eines geeigneten Formgebungsverfahrens gefertigt werden. Mittels des zweiten CAD-Teildatensatzes wird dann das hochfeste Brückengerüst um eine ästhetische keramische Verblendung ergänzt, wobei Materialien unterschiedlicher Sinterschwindung angewandt werden.

Durch die Erstellung des ersten CAD-Teildatensatzes kann auch durch konventionelle Verfahren hergestellter Zahnersatz (z.B. gegossenes Brückengerüst) oder auch durch subtraktive Verfahren (Schleifen, Fräsen) hergestellter Zahnersatz weiterverarbeitet werden. Für die ästhetische und/oder funktionelle Verblendung wurde der zweite CAD-Teildatensatz, der in weitere Teildatensätze untergliedert werden kann, erstellt.

Alternativ kann die Herstellung der Hohlformen durch additive Verfahren, wie Stereolithographie oder sequentiellen Auftrag mit nachfolgendem Sintern erfolgen, oder die Formgebung einzelner Anteile des Zahnersatzes durch additive Verfahren, wie Stereolithographie oder sequentiellen Auftrag von Metall oder Keramik mit nachfolgendem Sintern realisiert werden.

Herausnehmbarer Zahnersatz kann mit der vorliegenden Erfindung besonders einfach und effektiv aus keramischen, metallischen und Polymer-Werkstoffen hergestellt werden, indem z.B. ein metallisches Gerüst nachfolgend um ästhetische Verblendungen ergänzt wird, an das wiederum aus Polymeren gefertigte Prothesensättel angefügt werden. Erreicht wird dieses, indem der einmal ermittelte CAD-Datensatz in beliebig viele Teildatensätze zerlegt werden kann unter jeweiliger Berücksichtigung der funktionellen Aufgabe des Teilbereiches eines mehrschichtigen Zahnersatzes. Das heißt zum Beispiel, dass ein Teilbereich nur ästhetische Gesichtspunkte berücksichtigen soll.

Bei der Verwendung der präfabrizierten Teile auf Implantaten ist es möglich, Formen in Serie herzustellen, die die präfabrizierten Teile als Bestandteil der Form enthalten. In diesem Fall wird im einfachsten Fall nur der individuelle Anteil der Form für den jeweiligen Patienten erstellt. Der erste CAD-Teildatensatz würde dann dem präfabrizierten Teil entsprechen. Denkbar ist jedoch auch, dass der erste CAD-Teildatensatz nochmals unterteilt würde und ein Teildatensatz dann den individuellen Anteil repräsentieren würde.

In einem vorbereitenden Schritt könnte das präfabrizierte Teil in einem subtraktiven Verfahren reduziert werden, um es auf die Form des ersten CAD-Teildatensatzes zu bringen und nachfolgend in einem oder mehreren Schritten um Anteile, die aus mechanisch festen Werkstoffen bestehen müssen, oder die aus funktionell vorteilhaften Werkstoffen oder solchen, die aus ästhetisch vorteilhaften Werkstoffen hergestellt werden müssen, zu ergänzen.

## Patentansprüche

1. Verfahren zur Herstellung mehrschichtig aufgebauter Brücken, Kronen, Teilkronen oder Inlays mit folgenden Verfahrensschritten:
a) Erstellung eines CAD-Datensatzes der herzustellenden Brücke, Krone, Teilkrone oder des Inlays aus den digitalisierten Messdaten der präparierten Zähne oder der Implantate und deren unmittelbaren Umgebung, in die die Brücke, Krone, Teilkrone oder das Inlay eingefügt werden soll,
b) Erstellung von einem ersten und einem zweiten CAD-Teildatensatz, wobei der erste CAD-Teildatensatz die tragende Gerüststruktur der Brücke, Krone, Teilkrone oder des Inlays und der zweite CAD-Teildatensatz die ästhetisch und/oder funktionell relevante, überwiegend der Mundhöhle zugewandte Außengeometrie des Zahnersatzes repräsentiert,
c) Herstellung der tragenden Gerüststruktur mittels des erstellten ersten CAD-Teildatensatzes,
d) Fertigstellung der tragenden Gerüststruktur zur mehrschichtig aufgebauten Brücke, Krone, Teilkrone oder zum mehrschichtig aufgebauten Inlay durch Auftrag einer Funktionsschicht mittels des zweiten CAD-Teildatensatzes, **dadurch gekennzeichnet, dass** die Funktionsschicht einschließlich des Restaurationsrandes aus keramischen Werkstoffen oder Polymeren durch Schlickergießen hergestellt wird, um eine Reproduktion physiologischer, natürlicher Kauflächen mit entsprechender Fissurentiefe zu ermöglichen.

2. Verfahren nach Anspruch 1, **dadurch gekennzeichnet,**
**dass** der CAD-Datensatz intraoral oder von Kiefermodellen oder Teilmodellen extraoral erstellt wird.

3. Verfahren nach Anspruch 1 und 2, **dadurch gekennzeichnet,**
**dass** die tragende Gerüststruktur aus metallischen und/oder keramischen Werkstoffen und/oder Polymeren hergestellt wird.

4. Verfahren nach einem der Ansprüche 1 bis 3, **dadurch gekennzeichnet,**
**dass** der zweite CAD-Teildatensatz in mehrere CAD-Teildatensätze unterteilt wird, um mehrteilige Formen mit Trennlinie im Bereich der größten Zirkumferenz herstellen zu können.

5. Verfahren nach einem der Ansprüche 1 bis 4, **dadurch gekennzeichnet, dass** die keramischen Werkstoffe und/oder die Polymere unter Überdruck in eine Form zur Erstellung der Funktionsschicht gepresst werden.

6. Verfahren nach einem der Ansprüche 1 bis 4, **dadurch gekennzeichnet, dass** die Formfüllung mit den keramischen Werkstoffen und/oder den Polymeren durch Anlegen eines Unterdruckes erfolgt.

7. Verfahren nach Anspruch 1, **dadurch gekennzeichnet,**
**dass** der erste CAD-Teildatensatz in weitere Teildatensätze unterteilt wird.

8. Verfahren nach Anspruch 1, **dadurch gekennzeichnet,**
**dass** der zweite CAD-Teildatensatz in weitere Teildatensätze unterteilt wird.

## Claims

1. A method for producing bridges, crowns, partial crowns or inlays formed of multiple layers, said method comprising the steps of:
a) compiling a CAD data set of the bridge, crown, partial crown or inlay to be produced from the digitized measurement data of the prepared teeth or of the implants and their immediate surroundings into which the bridge, crown, partial crown or inlay is to be inserted;
b) compiling a first CAD partial data set and a second CAD partial data set, wherein the first CAD partial data set represents the supporting framework structure of the bridge, crown, partial crown or inlay, and the second CAD partial data set represents the tooth replacement's aesthetically and/or functionally relevant outer geometry which faces predominantly towards the oral cavity;
c) producing the supporting framework structure by means of the first CAD partial data set compiled, and
d) finishing the supporting framework structure for the multilayer bridge, crown, partial crown or inlay by applying a functional layer by means of the second CAD partial data set,
**characterised in that**
the functional layer, including the restoration edge, is produced from ceramic materials or polymers by slip casting in order to make it possible to reproduce physiological, natural occlusal surfaces with a corresponding fissure depth.

2. The method according to claim 1, **characterised in that** the CAD data set is produced intraorally or is produced extraorally from jaw models or partial models.

3. The method according to claims 1 and 2, **characterised in that** the supporting framework structure is produced from metallic and/or ceramic materials and/or polymers.

4. The method according to any one of claims 1 to 3, **characterised in that** the second CAD partial data set is divided into a plurality of CAD partial data sets so as to make it possible to produce moulds having multiple parts with a separating line in the area of the largest circumference.

5. The method according to any one of claims 1 to 4, **characterised in that** the ceramic materials and/or the polymers are pressed in a mould with overpressure to produce the functional layer.

6. The method according to any one of claims 1 to 4, **characterised in that** the mould is filled with the ceramic materials and/or the polymers by applying vacuum pressure.

7. The method according to claim 1, **characterized in that** the first CAD partial data set is divided into additional partial data sets.

8. The method according to claim 1, **characterized in that** the second CAD partial data set is divided into additional partial data sets.

## Revendications

1. Procédé de fabrication de bridges, couronnes, couronnes partielles ou inlays à structure multicouche, ledit procédé comportant les étapes suivantes:
a) élaboration d'un jeu de données CAD dudit bridge, de ladite couronne, de ladite couronne partielle ou dudit inlay à fabriquer à partir des données de mesure numérisées des dents préparées ou des implants préparés et leur environnement immédiat dans lequel ledit bridge, ladite couronne, ladite couronne partielle ou ledit inlay doivent être placés,
b) élaboration d'un premier et deuxième jeux partiels de données CAD, ledit premier jeu partiel de données CAD représentant la structure porteuse du bridge, de la couronne, de la couronne partielle ou de l'inlay et le deuxième jeu partiel de données CAD représentant la géométrie extérieure pertinente du point de vue esthétique et/ou fonctionnel, tournée principalement vers la cavité buccale, de la prothèse dentaire,
c) fabrication de la structure porteuse au moyen du premier jeu partiel de données CAD, et
d) réalisation finale de la structure porteuse sous forme d'un bridge, d'une couronne, d'une couronne partielle ou d'un inlay à structure multicouche par application d'une couche fonctionnelle au moyen du deuxième jeu partiel de données CAD,
**caractérisé en ce que**
la couche fonctionnelle, y compris le bord de restauration, est fabriquée à partir de matériaux céramiques ou de polymères par coulage en barbotine pour permettre une reproduction de faces occlusales physiologiques et naturelles avec une profondeur de fissure correspondante.

2. Procédé selon la revendication 1, **caractérisé en ce que** le jeu de données CAD est élaboré intraoralement ou extra-oralement, à base de maquettes des mâchoires ou de parties des mâchoires.

3. Procédé selon la revendication 1 et 2, **caractérisé en ce que** la structure porteuse est fabriquée à partir de matériaux métalliques et/ou céramiques et/ou à partir de polymères.

4. Procédé selon l'une quelconque des revendications 1 à 3, **caractérisé en ce que** le deuxième jeu partiel de données CAD est divisé en plusieurs jeux partiels de données CAD pour permettre la fabrication de moules en plusieurs parties avec une ligne de séparation dans la région de la circonférence maximale.

5. Procédé selon l'une quelconque des revendications 1 à 4, **caractérisé en ce que** les matériaux céramiques et/ou les polymères sont pressés, par surpression, dans un moule afin de produire la couche fonctionnelle.

6. Procédé selon l'une quelconque des revendications 1 à 4, **caractérisé en ce que** le moule est rempli avec les matériaux céramiques et/ou les polymères en appliquant une dépression.

7. Procédé selon la revendication 1, **caractérisé en ce que** le premier jeu partiel de données CAD est divisé en d'autres jeux partiels de données.

8. Procédé selon la revendication 1, **caractérisé en ce que** le deuxième jeu partiel de données CAD est divisé en d'autres jeux partiels de données.
